# EUROPÄISCHE PATENTSCHRIFT

(11) **EP 0 724 005 B1**
(45) Veröffentlichungstag und Bekanntmachung des Hinweises auf die Patenterteilung: **20.02.2002**
(21) Anmeldenummer: 95120314.0
(22) Anmeldetag: 21.12.1995
(51) Int. Cl.: C09K 19/00, C09K 19/40, C09D 5/36, C09B 67/20, C09K 19/54

(54) **Pigment mit vom Betrachungswinkel abhängiger Farbigkeit, dessen Herstellung sowie Verwendung in einem Lack, insbesondere für Kraftfahrzeuge**
Pigment with colour dependant of viewing angle, its production and its use in a lacquer, especially for motor vehicles
Pigment ayant une coloration fonction de l'angle d'observation, sa fabrication et son utilisation dans une laque, notamment pour des véhicules automobiles

(30) Priorität: 26.01.1995 DE 19502413
(43) Veröffentlichungstag der Anmeldung: 31.07.1996
(73) Patentinhaber: DaimlerChrysler AG, 70567 Stuttgart (DE)
(72) Erfinder: Dannenhauer, Fritz, Dr., D-79686 Hasel (DE); Holdik, Karl, Dr., D-89081 Ulm (DE); Mezger, Fritz, Dr., D-89079 Ulm (DE)

(56) Entgegenhaltungen:
- WO-A-95/29961
- WO-A-95/29962
- DE-A- 4 240 743
- DE-A- 4 418 075

## Beschreibung

Die Erfindung betrifft ein Pigment mit vom Betrachtungswinkel abhängiger Farbigkeit, erhalten durch dreidimensionales Vernetzen von orientierten Substanzen flüssigkristalliner Struktur mit chiraler Phase.

Die Erfindung betrifft ferner ein Verfahren zum Herstellen eines Pigmentes mit vom Betrachtungswinkel abhängiger Farbigkeit, bei dem orientierte Substanzen flüssigkristalliner Struktur mit chiraler Phase dreidimensional vernetzt werden.

Die Erfindung betrifft ferner einen Lack, der ein derartiges Pigment enthält sowie ein Kraftfahrzeug, lackiert mit einem derartigen Lack.

Ein derartiges Pigment sowie dessen Herstellung und Verwendung als Lack, insbesondere als Lack für Kraftfahrzeuge, ist aus der DE 42 40 743 A1 bekannt.

Flüssigkristalline Substanzen zur Herstellung derartiger Pigmente besitzen eine verdrillte Struktur mit einer Ganghöhe, die einer Wellenlänge des Lichtes im Bereich von UV bis IR entspricht. Diese Struktur findet sich beispielsweise bei cholesterischen Flüssigkristallen. Cholesterische Flüssigkristalle, oder allgemein flüssigkristalline Substanzen mit chiraler Phase, die eine verdrillte Struktur mit einer gewünschten Ganghöhe besitzen, können aus nematischen, smektischen oder diskotischen Strukturen erhalten werden, indem man ihnen eine chirale Substanz zusetzt. Art und Anteil der chiralen Substanz bestimmen die Ganghöhe der verdrillten Struktur und damit die Wellenlänge des reflektierten Lichtes. Die Verdrillung der Struktur kann sowohl links- als auch rechtshändig sein. Die Ausgangssubstanzen besitzen zudem polymerisierbare, polykondensierbare oder einer Polyaddition zugängliche Gruppen.

Diese Substanzen werden orientiert, beispielsweise während des Auftragens mit einer Rakel auf eine Folie. Anschließend werden die Substanzen vernetzt, beispielsweise durch Bestrahlen mit UV-Licht. Dabei entsteht das Pigment, das nach Ablösen von der Folie in die gewünschte Korngröße gebracht werden kann.

Ein großer Anwendungsbereich derartiger Pigmente ist die Einarbeitung in Lacke oder Lacksysteme, insbesondere Lacke zum Lakkieren von Kraftfahrzeugen. Ein so lackiertes Kraftfahrzeug zeigt abhängig vom Betrachtungswinkel an ein und derselben Stelle eine unterschiedliche Farbigkeit, beispielsweise eine blaue, eine grüne oder eine mit Rottönen erscheinende Farbe.

Bei dem praktischen Einsatz solcher Pigmente bei der Lackierung von Kraftfahrzeugen wurde nunmehr festgestellt, daß sich die Farbe in Abhängigkeit von der Einbrenntemperatur des Lackes stark verändert.

Es ist zwar erwünscht, mit solchen Farbpigmenten bei unterschiedlichen Betrachtungswinkeln unterschiedliche Farberscheinungen zu erhalten, es ist aber nicht erwünscht, daß bei einem bestimmten Betrachtungswinkel, abhängig von der Einbrenntemperatur oder von Temperaturbehandlungen der Pigmente, unterschiedliche Farbtöne resultieren.

Dies ist nicht nur in dem Anwendungsbereich der Pigmente für Lacke, insbesondere für Kraftfahrzeuglacke, unerwünscht, sondern bei jeglichen Anwendungen der Pigmente, bei denen diese Wärmebehandlungen unterworfen sind. So ist ein weiterer Anwendungsbereich derartiger Pigmente die Kosmetikindustrie, bei der, beispielsweise aus Gründen der Sterilisierung, Cremes, Pasten o. dgl. erwärmt werden. Auch in diesen Anwendungsbereichen soll kein Farbshift in Abhängigkeit der Temperatur auftreten.

Bei dem zuvor erwähnten Einsatz der Pigmente in Lacksystemen zum Lackieren von Kraftfahrzeugen werden die Lacke bei der Erstlackierung der Karosserie bei etwa 130 °C eingebrannt. Bei späteren Reparaturlackierungen können derart hohe Temperaturen nicht mehr eingesetzt werden, da ansonsten andere Bauelemente des Kraftfahrzeuges beeinträchtigt werden. Reparaturlackierungen werden daher bei etwa 80 °C durchgeführt. Es wurde im praktischen Einsatz festgestellt, daß diese unterschiedlichen Einbrenntemperaturen bei ein und demselben ausgänglichen Pigment starke Farbverschiebungen, insbesondere Blauverschiebungen, hervorrufen.

Es ist daher Aufgabe der vorliegenden Erfindung, hier Abhilfe zu schaffen und Pigmente der eingangs genannten Art derart weiterzuentwickeln, daß deren Farbigkeit bei einem bestimmten Betrachtungswinkel durch Einwirkung erhöhter Temperaturen weitgehenst unverändert bleibt.

Erfindungsgemäß wird die Aufgabe bei einem Pigment dadurch gelöst, daß das Vernetzen in Gegenwart von zumindest einer weiteren, zumindest zwei vernetzbare Doppelbindungen enthaltenden, farbneutralen, organischen Verbindung durchgeführt worden ist. Diese organische Verbindung nimmt während der Vernetzung auf das Farbergebnis der flüssigkristallinen Struktur keinen Einfluß. Der Anteil der farbneutralen Verbindungen am Gesamtgewicht der zu vernetzenden Gesamtmischung beträgt vorteilhafterweise zwischen 5 Gew% und 20 Gew%.

Bei einem Verfahren wird die Aufgabe dadurch gelöst, daß den Substanzen vor dem Vernetzen zumindest eine weitere, zumindest zwei vernetzbare Doppelbindungen enthaltende, farbneutrale Verbindung zugemischt wird.

Durch Zumischen von vernetzbaren Verbindungen, die zumindest zwei Doppelbindungen enthalten, kann die Vernetzungsdichte der Pigmente erhöht werden. Zugleich wird eine gewisse Verdünnung der reaktiven Komponenten, die die Farbpigmente bilden, erzielt, wobei diese "Reaktivverdünner" beim Vernetzen in die resultierende dreidimensionale Matrix integriert werden.

Es konnte überraschenderweise festgestellt werden, daß durch die Verdünnung einerseits und die Erhöhung der Vernetzungsdichte andererseits die Farbe der resultierenden Pigmente als solche nicht verändert wird und zugleich eine sehr hohe Farbbeständigkeit bei erhöhten Temperaturen erzielt wird, somit der Farbshift verringert werden kann.

Unter "farbneutralen" Verbindungen im Sinne der vorliegenden Erfindung sind solche zu verstehen, die einerseits selbst keinen unerwünschten Einfluß auf das Farbergebnis der reaktiven Substanzen flüssigkristalliner Struktur mit chiraler Phase ausüben und andererseits durch ihre Funktionalität die Möglichkeit von zusätzlichen Vernetzungspunkten schaffen.

Somit wird die Aufgabe vollkommen gelöst.

In einer weiteren Ausgestaltung der Erfindung weisen die farbneutralen Verbindungen mehr als drei vernetzbare Doppelbindungen auf. Diese erhöhte Funktionalität eröffnet die Möglichkeit stark erhöhter Vernetzungsdichten bei den erfindungsgemäßen Pigmenten und trägt besonders zur Farbhaltigkeit gegenüber erhöhten Temperaturen bei.

In einer weiteren Ausgestaltung der Erfindung weisen die farbneutralen Verbindungen Doppelbindungen vom Acrylat-, Methacrylat-, Vinyl-, Allyltyp auf.

Diese Maßnahmen haben nun den erheblichen praktischen Vorteil, daß diese Doppelbindungstypen ähnlich denjenigen funktionellen Gruppen sind, die bei den Substanzen flüssigkristalliner Struktur mit chiraler Phase für die dreidimensionale Vernetzung sorgen, so daß die nunmehr zusätzlich zugemischten Verbindungen mittels gleicher Starter oder Initiatoren vernetzt werden können, wie die eigentlichen, die Pigmente bildenden Substanzen. Werden beispielsweise solche Substanzen flüssigkristalliner Struktur ausgewählt, die mit UV-Licht vernetzbar sind, so können entsprechende, durch UV-Licht vernetzbare farbneutrale Verbindungen zugesetzt werden, um den gewünschten Farbhaltigkeitseffekt zu erzielen. Dies ist somit verfahrensmäßig und fertigungstechnisch sehr einfach zu bewerkstelligen, es müssen nur die entsprechenden Verbindungen vor dem Vernetzen hinzugemischt werden, ohne daß deswegen andersartige oder zusätzliche Starter oder Initiatoren eingesetzt oder angewendet werden müssen.

Vorteilhafterweise werden farbneutrale Verbindungen, ausgewählt aus der Gruppe bestehend aus den Acrylaten, Polyurethanen, Epoxiden, Siloxanen, Polyester und Alkydharzen, eingesetzt.

Besonders vorteilhaft ist die zumindest eine farbneutrale Verbindung, ausgewählt aus 1,6-Hexandioldiacrylat, Divinylbenzol, Trivinylalkoxysilanen, trifunktionellen Polyurethanacrylatoligomeren, Mischungen aus Pentaerythroltri- und -tetraacrylaten, tetrafunktionellen Acrylatoligomeren, Tetraallylsilan, Tetravinylsilan, Tetrakis-(2-methacryloxyalkoxy)silanen, 1,3,5,7-Tetravinyltetraalkylcyclotetrasiloxanen, hexafunktionellen Polyurethanacrylatoligomeren, Dipentaerythrolhexaacrylat.

Die farbneutrale Verbindung ist vorteilhafterweise bis zu 15 Gew.-%, bezogen auf das Gesamtgewicht der zu vernetzenden Gesamtmischung, enthalten.

Die Pigmente können in herkömmliche Lacksysteme eingearbeitet werden, wozu die Pigmente in eine geeignete Korngröße gemahlen und ggf. klassiert werden.

Wird ein Kraftfahrzeug mit einem derartigen Lack bzw. einem Lacksystem lackiert, wird ein gegenüber den entsprechenden Pigmenten ohne zusätzliche farbneutrale Verbindungen stark reduzierter Farbshift bei selbst hohen Einbrenntemperaturunterschieden beobachtet. So kann beispielsweise der ΔE Wert, der bei Lacken, die mit Farbpigmenten der eingangs genannten Art versehen werden, um weit über 70 % verringert werden, wenn man die Farben von lackierten Proben bei Einbrenn- bzw. Trockentemperaturen von Raumtemperatur und 130 °C vergleicht. Entsprechend ausgeprägte Ergebnisse erhält man, wenn man die Farben von lackierten Blechen bei Einbrenntemperaturen von 80 °C und 130 °C vergleicht. Entsprechendes gilt für die Δλ Werte.

Es versteht sich, daß die vorstehend genannten und nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele näher beschrieben und erläutert.

### A Darstellen von Flüssigkristallmischungen

Es wird ein Polyorganosiloxan hergestellt, wie unter Beispiel 1, A: "Polyorganosiloxane mit acrylsäurigen Seitenketten" der DE 42 40 743 A1 beschrieben. Der Kern des Siloxanoligomers besteht aus einem Si-O-Achtring, von dem im statischen Mittel zwei Si-Atome eine methacrylsäurehaltige Seitenkette mit je einer endständigen Doppelbindung tragen, die beiden anderen Si-Atome des Achtringes sind je mit einem Benzoesäurecholesterinesterrest verknüpft.

Zur Herstellung einer roten Flüssigkristallmischung werden 80 Gew.-% des zuvor beschriebenen Polyorganosiloxans mit 20 Gew.-% Methacryloxybenzoesäure(4-ethyl-phenyl)ester vermischt (eine solche Mischung ist erhältlich unter der Bezeichnung CC3767 von der Firma Wacker Chemie).

Zur Herstellung einer blauen Flüssigkristallmischung werden 70 Gew.-% des zuvor beschriebenen Polyorganosiloxans mit 30 Gew.-% Methacrylsäurecholesterinester vermischt (eine solche Mischung ist unter der Bezeichnung CC3939 von der Firma Wacker Chemie erhältlich).

### B Herstellung von Pigmenten, Lacken und lackierten Proben

### Vergleichsbeispiel 1

Es wird eine Mischung von rotem Flüssigkristall (CC3767) und blauem Flüssigkristall (CC3939) im Gewichtsverhältnis 60 : 40 hergestellt. Zu dieser Mischung werden 4 Gew.-% Photoinitiator Irgacure 907 (erhältlich bei Ciba Marienburg GmbH, 2-Methyl-1-[4-(methylthio)phenyl]-2-morpholino-propanon-1) gegeben und gut durchmischt. Anschließend wird die Flüssigkristallmischung bei 90°C auf eine Kunststoffolie gerakelt und bei 80°C mittels UV-Licht vernetzt. Der vernetzte Flüssigkristall wird von der Folie abgetrennt und gemahlen.

Nach dem Mahlen liegt der Flüssigkristall als Pigment vor und wird in ein Bindemittelsystem der Firma Herberts (erhältlich unter der Bezeichnung 58L 90057) eingearbeitet. Das Pigment wird mit 4 Gew.-% zugegeben, gut dispergiert und anschließend mit Herberts MSB-Verdünnung 2 : 1 verdünnt.

Der so erhaltene Lack mit den flüssigkristallinen Pigmenten wird mittels Tauchen auf schwarze Metallbleche appliziert, die anschließend noch mit einem BASF 2K-Klarlack überschichtet werden.

Die Proben (lackierte Bleche) werden anschließend während einer Stunde getrocknet, und zwar jeweils bei unterschiedlichen Trockungstemperaturen, nämlich bei Raumtemperatur, 80°C, 100°C und 130°C.

Anschließend wird an jeder Probe mittels eines Farbmeßgerätes "Colorview" von Byk-Gardner das Reflexionsmaxima im Bereich zwischen 380 und 760 nm bestimmt (Meßgeometrie 45° bzw.0°).

Es wurde die Differenz (Δλ) der Maxima der Proben gebildet, die bei Raumtemperatur und bei 130°C getrocknet wurden, sowie die Differenz derjenigen Proben gebildet, die bei 80°C und 130°C getrocknet wurden.

Ferner wurden auf diesem Farbmeßgerät die entsprechenden ΔE Werte (Farbabstand nach CIE) dieser Proben bestimmt.

### Ausführungsbeispiel 1

Es wird eine Mischung von rotem Flüssigkristall CC3767 und blauem Flüssigkristall CC3939 wie zuvor unter Vergleichsbeispiel 1 beschrieben im Verhältnis von 60 : 40 hergestellt und 4 Gew.-% Photoinitiator Irgacure 907 hinzugegeben.

Zusätzlich wird dieser Mischung 5 Gew.-% einer Mischung aus Pentaerythroltri- und -tetraacrylat (vertrieben von der Firma UCB unter der Bezeichnung PETIA) sowie 5 Gew.-% eines tetrafunktionellen Acrylatoligomeren (vertrieben von der Firma UCB unter der Bezeichnung EBECRYL 40) hinzugegeben und gut durchmischt. Anschließend wird die Mischung wie zuvor beschrieben auf einer Folie gerakelt, zu einem Lack verarbeitet und auf schwarze Bleche appliziert, die entsprechend bei Raumtemperatur, 80°C, 100 °C und 130°C getrocknet wurden. Auch von diesen Proben wurden entsprechende Δλ und ΔE Werte bestimmt.

### Vergleichsbeispiel 2

Es wird eine Mischung von rotem Flüssigkristall CC3767 und blauem Flüssigkristall CC3939, wie unter Vergleichsbeispiel 1 beschrieben, jedoch im Verhältnis 80 : 20 hergestellt. Zu dieser Mischung werden 4 Gew.-% Photoinitiator Irgacure 907 gegeben.

Anschließend wird gleich wie bei Vergleichsbeispiel 2 verfahren, also die Δλ und ΔE Werte der zu vergleichenden Proben (RT-130°C, 80°C-130°C) bestimmt.

### Ausführungsbeispiel 2

Es wird die unter Vergleichsbeispiel 2 beschriebene 80 : 20 Mischung von CC3767 und CC3939 mit dem Photoinitiator Irgacure 907 hergestellt.

Ferner wird zu dieser Mischung 5 Gew.-% einer Mischung aus Pentaerythroltri- und tetraacrylat (vertrieben von der Firma UCB unter der Bezeichnung PETIA) und 5 Gew.-% eines hexafunktionellen Polyurethanacrylatoligomeren (vertrieben von der Firma UCB unter der Bezeichnung EBECRYL 5129, Molekulargewicht 2000) gegeben und durchmischt. Diese Mischung wird wie unter Ausführungsbeispiel 1 beschrieben verarbeitet und bei den zu vergleichenden Proben werden die ΔE bzw. Δλ Werte bestimmt.

Die Ergebnisse sind in der nachfolgenden Tabelle zusammengestellt.

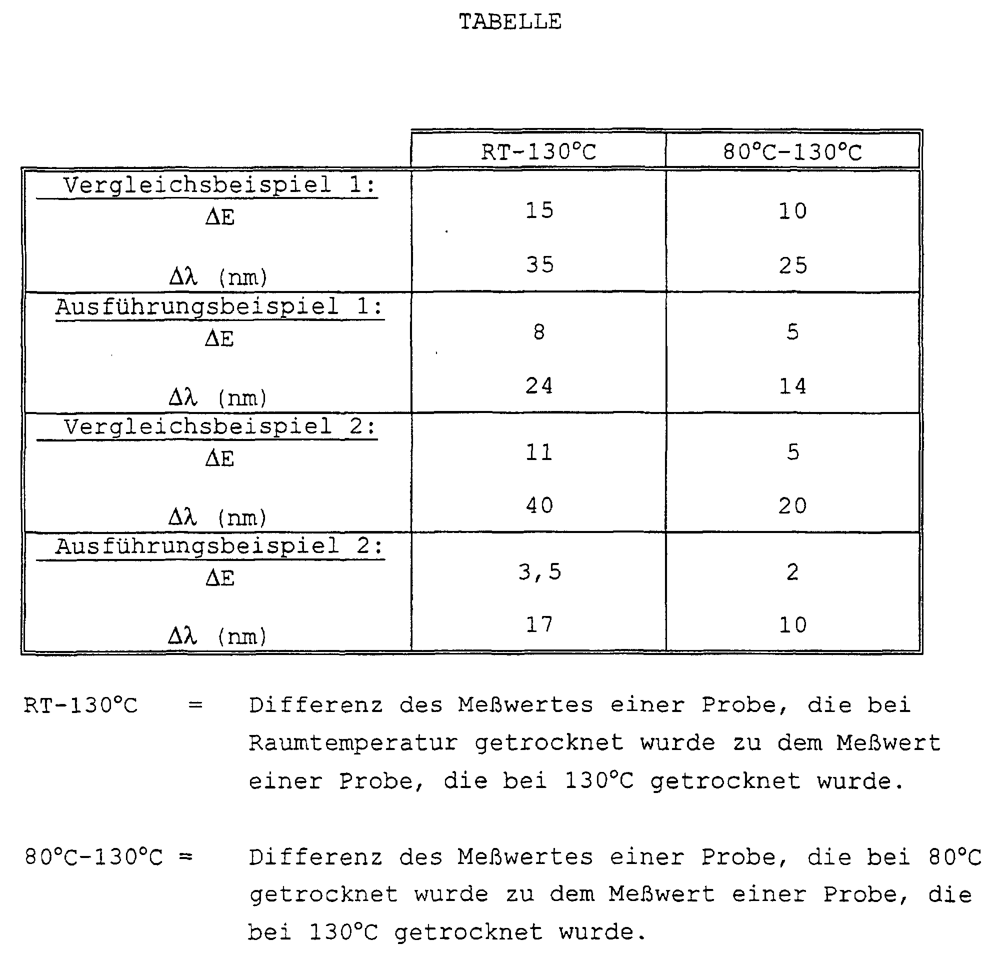

Aus der TABELLE ist ersichtlich, daß bei den Ausführungsbeispielen, bei denen gegenüber den Vergleichsbeispielen beim Vernetzen zusätzliche, zumindest zwei vernetzbare Doppelbindungen enthaltende farbneutrale Verbindungen vorhanden sind, wesentlich geringere ΔE bzw. Δλ Werte erhalten werden, d.h. durch diese Zusätze sind die Pigmente bezüglich erhöhter Temperaturen wesentlich farbhaltiger.

Außerdem kann bei einem Vergleich der Ergebnisse von Ausführungsbeispiel 1 mit denen von Ausführungsbeispiel 2 festgestellt werden, daß bei höherer Funktionalität der zugesetzten farbneutralen Verbindungen geringere ΔE bzw. Δλ Werte erhalten werden. Daraus ist zu schließen, daß eine höhere Funktionalität eine stärkere Herabsetzung des Farbshifts bei erhöhten Temperaturen bewirkt.

## Patentansprüche

1. Pigment mit vom Betrachtungswinkel abhängiger Farbigkeit, erhalten durch dreidimensionales Vernetzen von orientierten Substanzen flüssigkristalliner Struktur mit chiraler Phase,
**dadurch gekennzeichnet,**
**daß** das Vernetzen in Gegenwart von zumindest einer weiteren, zumindest zwei vernetzbare Doppelbindungen enthaltenden, farbneutralen organischen Verbindung, welche während der Vernetzung auf das Farbergebnis der orientierten Substanzen flüssigkristalliner Struktur keinen Einfluß nimmt, durchgeführt worden ist, wobei die farbneutrale Verbindung mit 5 bis 20 Gew.-% bezogen auf das Gesamtgewicht der zu vernetzenden Gesamtmischung enthalten ist.

2. Pigment nach Anspruch 1,
**dadurch gekennzeichnet,**
**daß** die farbneutrale Verbindung mehr als drei vernetzbare Doppelbindungen aufweist.

3. Pigment nach Anspruch 1 oder 2,
**dadurch gekennzeichnet,**
**daß** die farbneutrale Verbindung Doppelbindungen vom Acrylat-, Methacrylat-, Vinyl-, Allyltyp aufweist.

4. Pigment nach einem der Ansprüche 1 bis 3,
**dadurch gekennzeichnet,**
**daß** farbneutrale Verbindungen, ausgewählt aus der Gruppe bestehend aus Acrylaten, Polyurethanen, Epoxiden, Siloxanen, Polyester und Alkydharzen enthalten sind.

5. Pigment nach einem der Ansprüche 1 bis 4,
**dadurch gekennzeichnet,**
**daß** farbneutrale Verbindungen, ausgewählt aus der Gruppe bestehend aus 1,6-Hexandioldiacrylat, Divinylbenzol, Trivinylalkoxysilanen, trifunktionellen Polyurethanacrylatoligomeren, Mischungen aus Pentaerythroltri- und tetraacrylaten, tetrafunktionellen Acrylatoligomeren, Tetraallylsilan, Tetravinylsilan, Tetrakis(2-methacryl-oxyalkoxy)silanen, 1,3,5,7-Tetravinyltetraalkylcyclotetrasiloxanen, hexafunktionellen Polyurethanacrylatoligomeren, Dipentaerythrolhexaacrylat, enthalten sind.

6. Pigmente nach einem der Ansprüche 1 bis 5,
**dadurch gekennzeichnet,**
**daß** die farbneutrale Verbindung mit bis zu 15 Gew.-% bezogen auf das Gesamtgewicht der zu vernetzenden Gesamtmischung enthalten ist.

7. Lack, **dadurch gekennzeichnet, daß** er ein Pigment nach einem der Ansprüche 1 bis 6 enthält.

8. Kraftfahrzeug, lackiert mit einem Lack nach Anspruch 7.

9. Verfahren zum Herstellen eines Pigments mit vom Betrachtungswinkel abhängiger Farbigkeit, bei dem orientierte Substanzen flüssigkristalliner Struktur mit chiraler Phase dreidimensional vernetzt werden,
**dadurch gekennzeichnet,**
**daß** den Substanzen vor dem Vernetzen zumindest eine weitere, zumindest zwei vernetzbare Doppelbindungen enthaltende, farbneutrale, organische Verbindung, welche während der Vernetzung auf das Farbergebnis der orientierten Substanzen flüssigkristalliner Struktur keinen Einfluß nimmt, in einem Anteil von 5 Gew.-% bis 20 Gew.-% bezogen auf das Gesamtgewicht der zu vernetzenden Gesamtmischung zugemischt wird.

10. Verfahren nach Anspruch 9,
**dadurch gekennzeichnet,**
**daß** die farbneutrale Verbindung vor dem Orientieren zugemischt wird.

11. Verfahren nach Anspruch 9 oder 10,
**dadurch gekennzeichnet,**
**daß** die farbneutrale Verbindung mit bis zu 15 Gew.-% bezogen auf das Gesamtgewicht der zu vernetzenden Gesamtmischung zugemischt wird.

## Claims

1. Pigment whose colour depends on the angle from which it is viewed, obtained by the three-dimensional cross-linking of orientated substances having liquid-crystalline structure with a chiral phase,
**characterised in that**
the cross-linking is carried out in the presence of at least one other organic compound of neutral colour comprising at least two cross-linkable double bonds, which, during the cross-linking, has no influence on the colour result of the orientated substances having liquid-crystalline structure, and the colour-neutral compound is present in a proportion of 5 to 20 weight-% referred to the total weight of the overall mixture to be cross-linked.

2. Pigment according to Claim 1,
**characterised in that**
the colour-neutral compound comprises more than three cross-linkable double bonds.

3. Pigment according to Claims 1 or 2,
**characterised in that**
the colour-neutral compound comprises double bonds of the acrylate, methacrylate, vinyl, or allyl type.

4. Pigment according to any of Claims 1 to 3,
**characterised in that**
colour-neutral compounds are chosen from the group consisting of acrylates, polyurethanes, epoxides, siloxanes, polyesters and alkyd resins.

5. Pigment according to any of Claims 1 to 4,
**characterised in that**
colour-neutral compounds are chosen from the group consisting of 1,6-hexanedioldiacrylate, divinylbenzol, trivinylalkoxysilanes, trifunctional polyurethaneacrylate oligomers, mixtures of pentaerythroltri- and -tetraacrylates, tetrafunctional acrylate oligomers, tetraallylsilane, tetravinylsilane, tetrakis(2-methacryloxyalkoxy)silanes, 1,3,5,7-tetravinyltetraalkylcyclotetrasiloxanes, hexafunctional polyurethaneacrylate oligomers, and dipentaerythrolhexaacrylate.

6. Pigments according to any of Claims 1 to 5,
**characterised in that**
the colour-neutral compound is present in a proportion up to 15 weight-% referred to the total weight of the overall mixture to be cross-linked.

7. Paint,
**characterised in that**
it contains a pigment according to any of Claims 1 to 6.

8. Motor vehicle painted with a paint according to Claim 7.

9. Method for producing a pigment whose colour depends on the angle from which it is viewed, in which orientated substances having liquid-crystalline structure with a chiral phase are three-dimensionally cross-linked,
**characterised in that**
before cross-linking, at least one further organic compound is added to the said substances, which is colour-neutral, contains at least two cross-linkable double bonds, and which, during the cross-linking, has no influence on the colour result of the orientated substances having liquid-crystalline structure, the said compound being added in a proportion of 5 to 20 weight-% referred to the total weight of the overall mixture to be cross-linked.

10. Method according to Claim 9,
**characterised in that**
the colour-neutral compound is added before orientation.

11. Method according to Claims 9 or 10,
**characterised in that**
the colour-neutral compound is added in a proportion up to 15 weight-% referred to the total weight of the overall mixture to be cross-linked.

## Revendications

1. Pigment ayant une couleur dépendant de l'angle d'observation, obtenu par réticulation tridimensionnelle de substances orientées ayant une structure de cristaux liquides avec une phase chirale, **caractérisé en ce que** la réticulation est mise en oeuvre en présence d'au moins un autre composé organique, de couleur neutre, contenant au moins deux doubles liaisons réticulables, composé qui pendant la réticulation n'a aucune influence sur le résultat coloristique des substances orientées ayant une structure de cristaux liquides, où le composé de couleur neutre est présent en une quantité de 5 à 20 % en poids par rapport au poids total du mélange total devant être réticulé.

2. Pigment selon la revendication 1, **caractérisé en ce que** le composé de couleur neutre comprend plus de trois doubles liaisons réticulables.

3. Pigment selon la revendication 1 ou 2, **caractérisé en ce que** le composé de couleur neutre comprend des doubles liaisons du type acrylate, méthacrylate, vinyle, allyle.

4. Pigment selon l'une des revendications 1 à 3, **caractérisé en ce qu'**il contient des composés de couleur neutre choisis dans l'ensemble comprenant les acrylates, les polyuréthannes, les époxydes, les siloxannes, les polyesters et les résines alkydes.

5. Pigment selon l'une des revendications 1 à 4, **caractérisé en ce qu'**il contient des composés de couleur neutre choisis dans l'ensemble comprenant le diacrylate de 1,6-hexanediol, le divinylbenzène, les trivinylalcoxysilanes, les poly(acrylates d'uréthanne) trifonctionnels oligomères, les mélanges de tri- et de tétraacrylate de pentaérythritol, les acrylates oligomères tétrafonctionnels, le tétraallylsilane, le tétravinylsilane, le tétrakis(2-méthacryloxyalcoxy)silane, les 1,3,5,7-tétravinyltétraalkylcyclotétrasiloxanes, les poly(acrylates d'uréthanne) hexafonctionnels oligomères, l'hexaacrylate de dipentaérythritol.

6. Pigments selon l'une des revendications 1 à 5, **caractérisés en ce que** le composé de couleur neutre est présent en une quantité allant jusqu'à 15 % en poids par rapport au poids total du mélange total devant être réticulé.

7. Vernis, **caractérisé en ce qu'**il contient un pigment selon l'une des revendications 1 à 6.

8. Véhicule à moteur, verni à l'aide d'un vernis selon la revendication 7.

9. Procédé de préparation d'un pigment ayant une couleur qui dépend de l'angle d'observation, dans lequel on soumet à une réticulation tridimensionnelle des substances orientées ayant une structure de cristaux liquides avec une phase chirale, **caractérisé en ce qu'**on mélange aux substances, avant la réticulation, et en une quantité de 5 à 20 % en poids par rapport au poids total du mélange total devant être réticulé, un autre composé organique, de couleur neutre, contenant au moins deux doubles liaisons réticulables, composé qui pendant la réticulation n'a aucune influence sur le résultat coloristique des substances orientées ayant une structure de cristaux liquides.

10. Procédé selon la revendication 9, **caractérisé en ce que** le composé de couleur neutre est ajouté avant l'orientation.

11. Procédé selon la revendication 9 ou 10, **caractérisé en ce qu'**on ajoute le composé de couleur neutre en une quantité allant jusqu'à 15 % en poids par rapport au poids total du mélange total devant être réticulé.
